# EUROPÄISCHE PATENTSCHRIFT

(11) **EP 1 812 478 B1**
(45) Veröffentlichungstag und Bekanntmachung des Hinweises auf die Patenterteilung: **03.12.2008**
(21) Anmeldenummer: 05807736.3
(22) Anmeldetag: 20.10.2005
(51) Int. Cl.: C08F 8/00

(54) **SILAN-MODIFIZIERTE POLYVINYLALKOHOLE**
SILANE-MODIFIED POLYVINYLALCOHOLS
ALCOOLS POLYVINYLIQUES MODIFIES AU SILANE

(30) Priorität: 21.10.2004 DE 102004051353
(43) Veröffentlichungstag der Anmeldung: 01.08.2007
(73) Patentinhaber: Wacker Chemie AG, 81737 München (DE)
(72) Erfinder: BACHER, Andreas, 84489 Burghausen (DE); FICKERT, Karl Ernst, 84503 Altötting (DE); MAYER, Theo, 84387 Julbach (DE)
(74) Vertreter: Schuderer, Michael
(86) Internationale Anmeldenummer: PCT/EP2005/011305
(87) Internationale Veröffentlichungsnummer: WO 2006/045535

(56) Entgegenhaltungen:
- DE-A1- 10 233 934
- FR-A- 2 579 604

## Beschreibung

Die Erfindung betrifft Silan-modifizierte Polyvinylalkohole, Verfahren zu deren Herstellung sowie deren Verwendung.

Silanmodifizierte Polyvinylalkohole sind insbesondere als Papierbeschichtungsmittel bekannt, und werden mittels Copolymerisation von Vinylacetat und ethylenisch ungesättigtem Silan und anschließender Hydrolyse hergestellt, oder durch nachträgliche Silylierung der Vinylallcoholeinheiten von Polyvinylalkohol. Die EP 76490 A1 beschreibt ein Papierbeschichtungsmittel auf der Basis von silanisierten Polyvinylalkoholen, welche mittels der beiden Verfahrensvarianten zugänglich sind. Die EP 1127706 A1 betrifft Inkjet-Aufzeichnungsmaterialien, welche eine Beschichtung mit silanfunktionellem Polyvinylalkohol aufweisen, die mit den beiden genannten Verfahrensvarianten zugänglich sind. In der DE 3519575 C2 wird ein wärmeempfindliches Aufzeichnungsmaterial mit einer Schutzschicht beschrieben, welche einen siliciumhaltigen Polyvinylalkohol enthält, welcher durch Silylierung der Vinylalkohol-Einheiten oder Copolymerisation mit Vinylsilan hergestellt wird. Die silanisierten Polyvinylalkohole aus der EP 1380599 A1 werden mittels Copolymerisation von ethylenisch ungesättigten Silanen erhalten, wobei zum Erhalt von terminal silanisierten Produkten in Gegenwart von Mercaptoverbindungen polymerisiert wird. Die EP 1080940 A2 beschreibt silanisierte Vinylalkohol-Olefin-Mischpolymerisate in Beschichtungsmitteln, wobei die Silangruppen durch Copolymerisation von ethylenisch ungesättigten Silanen oder durch nachträgliche Silylierung der Vinylalkoholgruppen erhalten werden.
Die WO 2004/013190 A1 beschreibt die Herstellung von silanmodifizierten Polyvinylalkohol, wobei Vinylester in Gegenwart von silanhaltigen Aldehyden polymerisiert werden und das damit erhaltene Vinylesterpolymerisat anschließend verseift wird.

Der Erfindung lag die Aufgabe zugrunde, Silan-modifizierte Polyvinylalkohole zur Verfügung zu stellen, welche in Formulierungen für Beschichtungsmittel zu vorteilhafter Rheologie und zu hoher Abriebfestigkeit der Beschichtung führen.

Gegenstand der Erfindung sind Silan-modifizierte Polyvinylalkohole erhältlich mittels radikalischer Polymerisation von einem oder mehreren Vinylestern in Gegenwart von epoxidfunktionellen Comonomeren, anschließender Silylierung der Epoxidgruppen mit nucleophilen Silanverbindungen, und Verseifung der Silan-modifizierten Vinylester-Mischpolymerisate.

Geeignete Vinylester sind Vinylester von unverzweigten oder verzweigten Carbonsäuren mit 1 bis 18 C-Atomen. Bevorzugte Vinylester sind Vinylacetat, Vinylpropionat, Vinylbutyrat, Vinyl-2-ethylhexanoat, Vinyllaurat, Vinylpivalat und Vinylester von α-verzweigten Monocarbonsäuren mit 5 bis 15 C-Atomen, beispielsweise VeoVa9^{R} oder VeoVa10^{R} (Handelsnamen der Firma Resolütions), sowie 1-Alkylvinylester mit Alkylresten mit 1 bis 6 C-Atomen und von Carbonsäuren mit 1 bis 6 C-Atomen wie 1-Methylvinylacetat. Besonders bevorzugt ist Vinylacetat.

Geeignete Epoxidgruppen enthaltende Comonomere sind Glycidylacrylat, Glycidylmethacrylat, Allylglycidether, Vinylglycidether, Vinylcyclohexenoxid, Limonenoxid, Myrcenoxid, Caryophyllenoxid, mit einem Glycidylrest im Aromaten substituierte Styrole und Vinyltoluole sowie mit einem Glycidrest im Aromaten substituierte Vinylbenzoate. Bevorzugt werden Glycidylacrylat, Glycidylmethacrylat. Vorzugsweise beträgt der Anteil der epoxidfunktionellen Comonomereinheiten 0.01 bis 10.0 Mol-%, bezogen auf die Gesamtmenge der Comonomere.

Neben den Vinylestern und epoxifunktionellen Comonomeren können gegebenenfalls noch ein oder mehreren Monomere aus der Gruppe umfassend Methacrylsäureester und Acrylsäureester von Alkoholen mit 1 bis 15 C-Atomen, Olefine, Diene, Vinylaromaten und Vinylhalogenide copolymerisiert werden. Geeignete Monomere aus der Gruppe der Ester der Acrylsäure oder Methacrylsäure sind Ester von unverzweigten oder verzweigten Alkoholen mit 1 bis 15 C-Atomen. Bevorzugte Methacrylsäureester oder Acrylsäureester sind Methyl(meth)acrylat, Ethyl(meth)acrylat, Propyl (meth)acrylat, n-, iso- und t-Butyl (meth)acrylat, 2-Ethylhexyl (meth) acrylat, Norbornyl (meth) acrylat, Benzyl (meth) acrylat, 2-Hydroxyethyl(meth)acrylat, Hydroxypropyl(meth)acrylat, n-Hexyl(meth) acrylat, Isooctyl(meth)acrylat, iso-Decyl(meth)-acrylat, Lauryl(meth)acrylat, Methoxyethyl(meth)acrylat, Phenoxyethyl (meth) acrylat, Isobornyl(meth)acrylat, Stearyl (meth) - acrylat, Cyclohexyl(meth)acrylat, alpha-Chloracrylester, alpha-Cyanacrylester. Besonders bevorzugt sind Methylacrylat, Methylmethacrylat, n-, iso- und t-Butylacrylat, 2-Ethylhexylacrylat und Norbornylacrylat.

Geeignete Diene sind 1,3-Butadien, Chloropren und Isopren. Beispiele für polymerisierbare Olefine sind Ethen, Propen und Isobutylen. Als Vinylaromaten können Styrol und Vinyltoluol einpolymerisiert werden. Aus der Gruppe der Vinylhalogenide werden üblicherweise Vinylchlorid, Vinylidenchlorid oder Vinylfluorid, vorzugsweise Vinylchlorid, eingesetzt. Der Anteil dieser Comonomere wird so bemessen, dass der Anteil an Vinylestermonomer > 50 Mol-% im Vinylester-Polymerisat beträgt.

Gegebenenfalls können noch weitere Comonomere in einem Anteil von vorzugsweise 0.1 bis 25 Mol-% enthalten sein. Beispiele hierfür sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und-nitrile, vorzugsweise N-Vinylformamid, Acrylamid und Acrylnitril; Mono- und Diester der Fumarsäure und Maleinsäure wie die Diethyl-, und Diisopropylester sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure. Weitere Beispiele sind Alkylvinylether wie Ethylvinylether, n-Butylvinylether, iso-Butylvinylether, tert-Butylvinylether, Cyclohexylvinylether, Octadecylvinylether, Hydroxybutylvinylether, Cyclohexandimethanolmonovinylether, Vinylmethylketon, N-Vinyl-N-Methylacetamid, N-Vinylcaprolactam, N-Vinylpyrrolidon, N-Vinylimidazol.

Geeignet sind auch vorvernetzende Comonomere wie mehrfach ethylenisch ungesättigte Comonomere, beispielsweise Divinyladipat, Diallylmaleat, Allylmethacrylat, Butandioldiacrylat oder Triallylcyanurat, oder nachvernetzende Comonomere, beispielsweise Acrylamidoglykolsäure (AGA), Methacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats. Geeignet sind auch kationische Monomere wie Trimethyl-3-(1-(meth)acrylamid-1,1-dimethylpropyl)ammoniumchlorid, Trimethyl-3-(1-(meth)acrylamidpropyl)ammoniumchlorid, 1-Vinyl-2-methylimidazol und deren quartärnisierten Verbindungen.

Die Vinylester-Mischpolymerisate können in bekannter Weise mittels Polymerisation hergestellt werden; vorzugsweise durch Substanzpolymerisation, Emulsionspolymerisation, Suspensionspolymerisation oder durch Polymerisation in organischen Lösungsmitteln, besonders bevorzugt in alkoholischer Lösung. Geeignete Lösungsmittel und Regler sind beispielsweise Methanol, Ethanol, Propanol, Isopropanol. Die Polymerisation wird unter Rückfluß bei einer Temperatur von 50°C bis 100°C durchgeführt und durch Zugabe gängiger Initiatoren radikalisch initiiert. Beispiele für gängige Initiatoren sind Percarbonate wie Cyclohexylperoxidicarbonat oder Perester wie t-Butylper-2-ethyl-hexanoat, t-Butylperneodecanoat oder t-Butylperpivalat.

Bevorzugt wird bis zu einem Polymerisationsgrad von 100 bis 5000 polymerisiert. Die Einstellung des Molekulargewichts kann in bekannter Weise durch den Lösungsmittelgehalt, durch Variation der Initiatorkonzentration, durch Variation der Temperatur, und durch Zugabe von Reglern erfolgen. Die Monomere können insgesamt vorgelegt werden, insgesamt zudosiert werden oder in Anteilen vorgelegt werden und der Rest nach der Initiierung der Polymerisation zudosiert werden. Die Dosierungen können separat (räumlich und zeitlich) durchgeführt werden oder die zu dosierenden Komponenten können alle oder teilweise, im Gemisch oder voremulgiert, dosiert werden.

Die Silanisierung des epoxidfunktionellen Vinylester-Mischpolymerisats erfolgt vorzugsweise in alkoholischer Lösung, beispielsweise in Methanol, und je nach Alkohol bei Temperaturen von 20°C bis 70°C, und unter Zugabe von Basen, beispielsweise NaOH, KOH oder NaOCH₃. Nach der Umsetzung wird der Ansatz neutralisiert und das silaniserte Vinylester-Mischpolymerisat als Feststoff isoliert. Die Einsatzmenge an nukleophiler Silanverbindungen hängt davon ab, wie hoch der Gehalt an epoxidfunktionellen Monomereinheiten im Vinylester-Mischpolymerisat ist. Bevorzugt wird die nukleophile Silanverbindung im molaren Überschuß eingesetzt, insbesondere in einem 5 bis 20 %-igem molaren Überschuß, jeweils bezogen auf das epoxidfunktionelle Comonomer.

Geeignete nukleophile Silanverbindungen sind mit Aminoalkyl-, Hydroxylalkyl- oder Mercaptoalkyl-Resten substituierte Silane mit mindestens einer Alkoxygruppe und jeweils 1 bis 6 C-Atomen im Alkylrest bzw. Alkoxyrest. Bevorzugt werden Aminoalkoxysilane, Aminoalkyldialkoxyalkylsilane, Aminoalkyldialkylalkoxysilane, Mercaptoalkylalkoxysilane, Mercaptoalkyldialkoxyalkylsilane, Mercaptoalkyldialkylalkoxysilane, Hydroxyalkylalkoxysilane, Hydroxyalkyldialkoxyalkylsilane, Hydroxyalkyldialkylalkoxysilane mit jeweils 1 bis 6 C-Atomen im Alkylrest bzw. Alkoxyrest. Besonders bevorzugt werden 3-(2-Aminoethylamino)-propyltrimethoxysilan, Aminopropyltriethoxysilan, Aminopropyltrimethoxysilan, Aminomethyltrimethoxysilan, Aminomethyltriethoxysilan, Aminomethyldiethoxymethylsilan, Mercaptopropyltrimethoxysilan.

Die Verseifung der Silan-modifizierten Vinylester-Mischpolymerisate erfolgt in an sich bekannter Weise, zum Beispiel nach dem Band- oder Kneterverfahren, im Alkalischen oder Sauren unter Zugabe von Säure oder Base. Vorzugsweise wird das Silanmodifizierte Vinylester-Mischpolymerisat in Alkohol, beispielweise Methanol, unter Einstellen eines Feststoffgehalts von 15 bis 70 Gew.-% aufgenommen. Bevorzugt wird die Hydrolyse im Basischen durchgeführt, beispielsweise durch Zugabe von NaOH, KOH oder NaOCH₃. Die Base wird im allgemeinen in einer Menge von 1 bis 5 Mol-% pro Mol Ester-Einheiten eingesetzt. Die Hydrolyse wird bei Temperaturen von 30°C bis 70°C durchgeführt. Nach Abschluß der Hydrolyse wird das Lösungsmittel abdestilliert und der Polyvinylalkohol wird als Pulver erhalten. Das Silan-modifizierte Vinylester-Mischpolymerisat kann aber auch durch eine sukzessive Zugabe von Wasser, während das Lösungsmittel abdestilliert wird, als wässrige Lösung gewonnen werden.

Die Silan-modifizierten Polyvinylalkohole haben im allgemeinen einen Hydrolysegrad von 50 Mol-% bis 99.99 Mol-%, besonders bevorzugt von 70 Mol-% bis 99 Mol-%, am meisten bevorzugt von ≥ 96 Mol-%. Als vollverseifte Polyvinylalkohole bezeichnet man dabei solche Polymerisate, deren Hydrolysegrad ≥ 96 Mol-% ist. Als teilverseifte Polyvinylalkohole sind solche zu verstehen, mit einem Hydrolysegrad > 50 Mol-% und < 96 Mol-%. Die Viskosität des Polyvinylalkohols (DIN 53015, Methode nach Höppler; 4 %-ige Lösung in Wasser) beträgt 1 bis 60 mPas, vorzugsweise 1 bis 6 mPas, und dient als Maß für das Molekulargewicht und für den Polymerisationsgrad der teil- oder vollverseiften Polyvinylalkohole.

Die silanisierten Polyvinylalkohole können in allen Anwendungen, in welchen silanmodifizierte Polyvinylalkohole üblich sind, eingesetzt werden. Insbesondere als Additiv in wässrigen Beschichtungssystemen zur Herstellung von Aufzeichnungsmaterialien wie fotografische Schichten und Tintenstrahlaufzeichnungsschichten und als Additiv zur Herstellung von Grundierungen bzw. Sizing Agent für Trennrohpapiere. Die Silan-haltigen Polyvinylalkohole eignen sich auch als Schutzkolloide bei der Polymerisation, sowie als Bestandteil in Formulierungen von Klebemitteln und von Beschichtungsmitteln für Verpackungsmaterialien, Baustoffe, Keramik, Glas und Holz, beispielsweise Glasfaserbinder und Glasklebemittel. Eine weitere Anwendung ist die als Bindemittel für Formulierungen von Agrochemikalien.

### Beispiel 1:

In einer thermostatisierten Laborapparatur mit 2.5 Liter Füllvolumen wurden unter Stickstoff 392.1 g Methanol, 6.46 g Glycidylmethacrylat und 322.8 g Vinylacetat vorgelegt. Unter Rühren wurden 757 mg t-Butylperpivalat zugegeben und der Ansatz auf 58°C aufgeheizt und während der Reaktion auf 60°C gehalten.
30 min nach Reaktionsbeginn wurden weitere 1.30 g t-Butylperpivalat zugegeben. Nach weiteren 30 min wurde eine Mischung aus 18.8 g Glycidylmethacrylat und 940 g Vinylacetat über einen Zeitraum von 165 min mit einer Rate von 348.7 ml/h zudosiert. Gleichzeitig wurden weitere 759 mg t-Butylperpivalat zugegeben. 75 min und 105 min nach Reaktionsbeginn wurden je 434 mg, nach 135 min 217 mg und nach 165 min, 195 min bzw. 230 min nach Reaktionsstart je 110 mg t-Butylperpivalat zugegeben. 270 min nach Reaktionsbeginn wurden dem Ansatz 326 g Methanol zugefügt. Nach einer Reaktionsdauer von 420 min wurde der Ansatz abgekühlt.
In einem Laborreaktor mit 2.5 Liter Inhalt wurden 230 g der methanolischen Polyvinylacetat-Lösung mit weiteren 877 g Methanol verdünnt. Die Lösung wurde auf 60°C aufgeheizt und mit 5.01 g 3-(2-Aminoethylamino)propyltrialkoxysilan versetzt.
Nach 2 h Reaktionszeit wurde der Ansatz auf 30°C abgekühlt und mit 104.75 g methanolischer NaOH versetzt (7.21 g NaOH 46 %-ig in Wasser gelöst in 97.54 g Methanol). Die Lösung wurde zunehmend trüber. Während der Gelphase wurde der Rührer auf höhere Drehzahl gestellt, um das Gel zu zerkleinern. Nach der Gelphase wurde noch 2 Stunden weiter reagieren gelassen, mit Essigsäure neutralisiert und der gebildete Feststoff abfiltriert, gewaschen und getrocknet.
Es wurde ein vollverseifter Polyvinylalkohol erhalten mit einer Höppler-Viskosität von 6 mPas (nach DIN 53015 als 4 Gew.-%-ige Lösung in Wasser).

### Beispiel 2:

In einer thermostatisierten Laborapparatur mit 2.5 Liter Füllvolumen wurden unter Stickstoff 612 g Wasser, 61.2 mg Kupfer-(II)-Acetat und 61.2 g einer 5 %-igen Polyvinylpyrrolidon-Lösung (PVP-K90) in Wasser vorgelegt. Unter Rühren wurde eine Lösung von 620 mg t-Butylper-2-ethylhexanoat (TBPEH 99 %-ig von Peroxid-Chemie GmbH), 322 mg t-Butylperneodecanoat (Pergan PND 95 %-ig), 6.46 g Glycidylmethacrylat und 42.8 g Isopropanol in 612 g Vinylacetat zulaufen gelassen. Der Reaktor wurde auf 51.5°C aufgeheizt, nach Abflauen der Reaktion wurde stufenweise auf 75°C aufgeheizt. Es wurde noch 2 Stunden bei dieser Temperatur gehalten, dann abgekühlt. Die entstandenen Polymer-Perlen wurden abgesaugt, gut mit Wasser gewaschen und getrocknet.
In einem Laborreaktor mit 2.5 Liter Inhalt wurden 90 g Polymer-Perlen in 810 g Methanol bei 50°C gelöst. Die Lösung wurde auf 60°C aufgeheizt und mit 0.603 g 3-(2-Aminoethylamino)-propyltrialkoxysilan versetzt. Nach 2 h Reaktionszeit wurde der Ansatz auf 30°C abgekühlt, bei stehendem Rührer mit 500 g Methanol überschichtet und sofort mit methanolischer NaOH versetzt (10 g NaOH 46 %-ig in Wasser, gelöst in 90 g Methanol) und der Rührer eingeschaltet. Die Lösung wurde zunehmend trüber. Während der Gelphase wurde der Rührer auf höhere Drehzahl gestellt, um das Gel zu zerkleinern. Nach der Gelphase wurde noch 2 Stunden weiter reagieren gelassen, mit Essigsäure neutralisiert und der gebildete Feststoff abfiltriert, gewaschen und getrocknet.
Es wurde ein vollverseifter Polyvinylalkohol erhalten mit einer Höppler-Viskosität von 27 mPas (4 %-ig in Wasser).

### Testung des Einsatzes in Tintenstrahlaufzeichnungsschichten:

### Rezeptur Streichmasse:

| | |
|---|---|
| Gefällte Kieselsäure | 100 Gew.-Teile |
| Si-PVAL (Beispiel 1) | 28 Gew.-Teile |
| Kationisches Dispergiermittel | 5 Gew.-Teile |
| Polymerdispersion | 12 Gew.-Teile |
| Festgehalt der Streichmasse: | 30 Gew.-% |

### Rohpapier:

### Geleimtes Papier ca. 80 g/m² ; Strichauftrag ca. 15 g/m²

### Austestung:

### Scheuertest:

Ein 4.5 cm breiter und 19 cm langer mit der Streichmasse bestrichener Papierstreifen wurde in einem Scheuerprüfer der Fa. Prüfbau (System Dr. Dürner) mit einem auf einen Stempel (500 g) aufgebrachten schwarzen Tonzeichenpapier mit 50 Hüben bearbeitet. Das resultierende schwarze Papier wurde danach optisch beurteilt, wobei die Note 1 das Optimum darstellt.

### Weißgrad:

Wurde mittels Remissionsmessung mit einem Filter (R 457) bestimmt und optisch beurteilt, wobei die Note 1 das Optimum darstellt

### Ergebnisse:

| Strichanalyse | Beispiel 1 |
|---|---|
| | |
| Scheuertest | 1 |
| Weißgrad optisch | 1 |
| Weißgrad R457 | 5.2 |

### Testung des Einsatzes in Trennrohpapieren:

### Herstellung des Papiers:

Die Grundierung (Lösung des Si-PVAL aus Beispiel 2) wurde mittels einer Laborleimpresse auf ein Rohpapier aufgetragen und entsprechend getrocknet (Strichgewicht 1.5 g/m² bis 3 g/m²). Auf das so grundierte Papier wurde eine Trennschicht aus 100 Gew.-Teilen eines vinylterminierten Polysiloxans (Dehesive 920), 2.4 Gew.-Teilen eines H-haltigen Siloxans (Vernetzer V90) und 1 Gew.-Teil Pt-Katalysator (Katalysator OL) aufgetragen und das beschichtete Papier bei 150°C für 7 Sekunden getempert.

### Testmethoden:

### Migrations-Prüfung:

Es wurde ein Testklebeband auf die frisch silikonisierte Seite aufgebracht und anschließend wieder abgezogen. Der Klebestreifen wurde so zusammengefaltet, dass sich die klebenden Oberflächen berührten. Dann wurden die Enden auseinandergezogen (Loop-Test). Weisen die aufeinander klebende Schichten eine gute Adhäsion auf, spricht dies für eine gute Haftung der Silikonschicht auf dem Substrat. Die Benotung beider Tests erfolgt in Schulnoten von 1 bis 6: 1 = sehr gut, 6 = sehr schlecht

### Rub Off:

Man reibt einmal mit dem Finger kräftig über die silikonisierte Oberfläche und betrachtet diese Stelle in schräg einfallendem Licht. Treten an dieser Stelle Helligkeitsunterschiede oder Streifen auf, haftet das Siliconprodukt nicht optimal. Zudem reibt man die Silikonschicht mehrmals stark mit dem Finger und beobachtet die Menge der Abriebsteilchen. Die Benotung beider Tests erfolgt in Schulnoten von 1 bis 6.

### Ergebnisse:

| | Beispiel 2 |
|---|---|
| | |
| Migration | 1 |
| Rub-Off | 1 |

## Patentansprüche

1. Silan-modifizierte Polyvinylalkohole erhältlich mittels radikalischer Polymerisation von einem oder mehreren Vinylestern in Gegenwart von epoxidfunktionellen Comonomeren, anschließender Silylierung der Epoxidgruppen mit nucleophilen Silanverbindungen, und Verseifung der Silan-modifizierten Vinylester-Mischpolymerisate.

2. Silan-modifizierte Polyvinylalkohole nach Anspruch 1, **dadurch gekennzeichnet, dass** als Vinylester Vinylacetat eingesetzt wird.

3. Silan-modifizierte Polyvinylalkohole nach Anspruch 1 oder 2, **dadurch gekennzeichnet, dass** als epoxidfunktionelle Comonomere Glycidylacrylat oder Glycidylmethacrylat eingesetzt wird.

4. Silan-modifizierte Polyvinylalkohole nach Anspruch 1 bis 3, **dadurch gekennzeichnet, dass** das epoxidfunktionelle Comonomer in einem Anteil von 0.01 bis 10.0 Mol-%, bezogen auf die Gesamtmenge der Comonomere eingesetzt wird.

5. Silan-modifizierte Polyvinylalkohole nach Anspruch 1 oder 4, **dadurch gekennzeichnet, dass** als nucleophile Silanverbindung eine oder mehrere eingesetzt werden, aus der Gruppe umfassend mit Aminoalkyl-, Hydroxyalkyl- oder Mercaptoalkyl-Resten substituierte Silane mit mindestens einer Alkoxygruppe und jeweils 1 bis 6 C-Atomen im Alkylrest bzw. Alkoxyrest.

6. Silan-modifizierte Polyvinylalkohole nach Anspruch 5, **dadurch gekennzeichnet, dass** als nucleophile Silanverbindung eine oder mehrere eingesetzt werden, aus der Gruppe umfassend Aminoalkoxysilane, Aminoalkyldialkoxyalkylsilane, A-minoalkyldialkylalkoxysilane, Mercaptoalkylalkoxysilane, Mercaptoalkyldialkoxyalkylsilane, Mercaptoalkyldialkylalkoxysilane, Hydroxyalkylalkoxysilane, Hydroxyalkyldialkoxyalkylsilane, Hydroxyalkyldialkylalkoxysilane mit jeweils 1 bis 6 C-Atomen im Alkylrest bzw. Alkoxyrest.

7. Verfahren zur Herstellung der Silan-modifizierten Polyvinylalkohole nach Anspruch 1 bis 6, mittels radikalischer Polymerisation von einem oder mehreren Vinylestern in Gegenwart von epoxidfunktionellen Comonomeren, anschließender Silylierung der Epoxidgruppen mit nucleophilen Silanverbindungen, und Verseifung der Silan-modifizierten Vinylester-Mischpolymerisate.

8. Verfahren nach Anspruch 7, **dadurch gekennzeichnet, dass** die Vinylester-Mischpolymerisate durch Polymerisation in organischen Lösungsmitteln hergestellt werden, und die damit erhaltenen epoxidfunktionellen Vinylester-Mischpolymerisate in Lösung mit einer oder mehreren Silanverbindungen, aus der Gruppe umfassend mit Aminoalkyl-, Hydroxyalkyl- oder Mercaptoalkyl-Resten substituierte Silane mit mindestens einer Alkoxygruppe und jeweils 1 bis 6 C-Atomen im Alkylrest bzw. Alkoxyrest, silanisiert werden, und die damit erhaltenen Silan-modifizierten Polyvinylalkohole bis zu einem Hydrolysegrad von 50 Mol-% bis 99.99 Mol-% verseift werden.

9. Verwendung der Silan-modifizierten Polyvinylalkohole nach Anspruch 1 bis 6 als Additiv in wässrigen Beschichtungssystemen zur Herstellung von Aufzeichnungsmaterialien und als Additiv zur Herstellung von Trennrohpapieren.

10. Verwendung der Silan-modifizierten Polyvinylalkohole nach Anspruch 1 bis 6 als Bestandteil in Formulierungen von Klebemitteln und von Beschichtungsmitteln für Verpackungsmaterialien, Baustoffe, Keramik, Glas und Holz.

11. Verwendung der Silan-modifizierten Polyvinylalkohole nach Anspruch 1 bis 6 als Bindemittel für Formulierungen von Agrochemikalien.

## Claims

1. Silane-modified polyvinyl alcohols obtainable by free-radical polymerization of one or more vinyl esters in the presence of epoxide-functional comonomers, subsequent silylation of the epoxide groups with nucleophilic silane compounds and hydrolysis of the silane-modified vinyl ester copolymers.

2. Silane-modified polyvinyl alcohols according to claim 1, **characterized in that** the vinyl ester used is vinyl acetate.

3. Silane-modified polyvinyl alcohols according to claim 1 or 2, **characterized in that** the epoxide-functional comonomer used is glycidyl acrylate or glycidyl methacrylate.

4. Silane-modified polyvinyl alcohols according to any of claims 1 to 3, **characterized in that** the epoxide-functional comonomer is used in a proportion of from 0.01 to 10.0 mol%, based on the total amount of the comonomers.

5. Silane-modified polyvinyl alcohols according to claim 1 or 4, **characterized in that** one or more nucleophilic silane compounds from the group consisting of silanes substituted by aminoalkyl, hydroxyalkyl or mercaptoalkyl radicals and having at least one alkoxy group and in each case from 1 to 6 C atoms in the alkyl radical or alkoxy radical are used as the nucleophilic silane compound.

6. Silane-modified polyvinyl alcohols according to claim 5, **characterized in that** one or more nucleophilic silane compounds from the group consisting of aminoalkoxysilanes, aminoalkyldialkoxyalkylsilanes, aminoalkyldialkylalkoxysilanes, mercaptoalkylalkoxysilanes, mercaptoalkyldialkoxyalkylsilanes, mercaptoalkyldialkylalkoxysilanes, hydroxyalkylalkoxysilanes, hydroxyalkyldialkoxyalkylsilanes, hydroxyalkyldialkylalkoxysilanes having in each case from 1 to 6 C atoms in the alkyl radical or alkoxy radical are used as the nucleophilic silane compound.

7. Process for the preparation of the silane-modified polyvinyl alcohols according to any of claims 1 to 6, by means of free-radical polymerization of one or more vinyl esters in the presence of epoxide-functional comonomers, subsequent silylation of the epoxide groups with nucleophilic silane compounds and hydrolysis of the silane-modified vinyl ester copolymers.

8. Process according to claim 7, **characterized in that** the vinyl ester copolymers are prepared by polymerization in organic solvents, and the epoxide-functional vinyl ester copolymers obtained thereby are silanized in solution with one or more silane compounds from the group consisting of silanes substituted by aminoalkyl, hydroxyalkyl or mercaptoalkyl radicals and having at least one alkoxy group and in each case from 1 to 6 C atoms in the alkyl radical or alkoxy radical, and the silane-modified polyvinyl alcohols obtained thereby are hydrolyzed to a degree of hydrolysis of from 50 mol% to 99.99 mol%.

9. Use of the silane-modified polyvinyl alcohols according to any of claims 1 to 6 as an additive in aqueous coating systems for the production of recording materials and as an additive for the production of release paper stocks.

10. Use of the silane-modified polyvinyl alcohols according to any of claims 1 to 6 as a constituent in formulations of adhesives and of coating materials for packaging materials, building materials, ceramic, glass and wood.

11. Use of the silane-modified polyvinyl alcohols according to any of claims 1 to 6 as a binder for formulations of agrochemicals.

## Revendications

1. Alcools polyvinyliques modifiés par des silanes pouvant être obtenus par polymérisation radicalaire d'un ou de plusieurs esters de vinyle en présence de comonomères à fonction époxyde, puis par silylation des groupements époxyde avec des composés de silane nucléophiles, et saponification des copolymères d'ester de vinyle modifiés par des silanes.

2. Alcools polyvinyliques modifiés par des silanes selon la revendication 1, **caractérisés en ce que** l'acétate de vinyle est utilisé en tant qu'ester de vinyle.

3. Alcools polyvinyliques modifiés par des silanes selon la revendication 1 ou 2, **caractérisés en ce que** l'acrylate de glycidyle ou le méthacrylate de glycidyle est utilisé en tant que comonomère à fonction époxyde.

4. Alcools polyvinyliques modifiés par des silanes selon les revendications 1 à 3, **caractérisés en ce que** le comonomère à fonction époxyde est utilisé en une proportion de 0,01 à 10,0 % en moles par rapport à la quantité totale des comonomères.

5. Alcools polyvinyliques modifiés par des silanes selon la revendication 1 ou 4, **caractérisés en ce qu'**un ou plusieurs composés du groupe comprenant les silanes substitués par des radicaux aminoalkyle, hydroxyalkyle ou mercaptoalkyle avec au moins un groupement alcoxy et à chaque fois 1 à 6 atomes C dans le radical alkyle ou le radical alcoxy sont utilisés en tant que composé de silane nucléophile.

6. Alcools polyvinyliques modifiés par des silanes selon la revendication 5, **caractérisés en ce qu'**un ou plusieurs composés du groupe comprenant les aminoalcoxysilanes, les aminoalkyldialcoxyalkylsilanes, les aminoalkyldialkylalcoxysilanes, les mercaptoalkylalcoxysilanes, les mercaptoalkyldialcoxyalkylsilanes, les mercaptoalkyldialkylalcoxysilanes, les hydroxyalkylalcoxysilanes, les hydroxyalkyldialcoxyalkylsilanes, les hydroxyalkyldialkylalcoxysilanes avec à chaque fois 1 à 6 atomes C dans le radical alkyle ou le radical alcoxy sont utilisés en tant que composé de silane nucléophile.

7. Procédé de fabrication d'alcools polyvinyliques modifiés par des silanes selon les revendications 1 à 6, par polymérisation radicalaire d'un ou de plusieurs esters de vinyle en présence de comonomères à fonction époxyde, puis par silylation des groupements époxyde avec des composés de silane nucléophiles, et saponification des copolymères d'ester de vinyle modifiés par des silanes.

8. Procédé selon la revendication 7, **caractérisé en ce que** les copolymères d'ester de vinyle sont fabriqués par polymérisation dans des solvants organiques et les copolymères d'ester de vinyle à fonction époxyde ainsi obtenus sont silanisés en solution avec un ou plusieurs composés de silane du groupe comprenant les silanes substitués par des radicaux aminoalkyle, hydroxyalkyle ou mercaptoalkyle avec au moins un groupement alcoxy et à chaque fois 1 à 6 atomes C dans le radical alkyle ou le radical alcoxy, et les alcools polyvinyliques modifiés par des silanes ainsi obtenus sont saponifiés jusqu'à un degré d'hydrolyse de 50 % en moles à 99,99 % en moles.

9. Utilisation des alcools polyvinyliques modifiés par des silanes selon les revendications 1 à 6 en tant qu'additif dans des systèmes aqueux de revêtement pour la fabrication de matériaux de dessin et en tant qu'additif pour la fabrication de papiers de séparation de base.

10. Utilisation des alcools polyvinyliques modifiés par des silanes selon les revendications 1 à 6 en tant que composant de formulations d'adhésifs et d'agents de revêtement pour matériaux d'emballage, matériaux de construction, céramique, verre et bois.

11. Utilisation des alcools polyvinyliques modifiés par des silanes selon les revendications 1 à 6 en tant que liant pour formulations de produits agrochimiques.
